# EUROPÄISCHE PATENTSCHRIFT

(11) **EP 0 493 840 B1**
(45) Veröffentlichungstag und Bekanntmachung des Hinweises auf die Patenterteilung: **13.12.1995**
(21) Anmeldenummer: 91122390.7
(22) Anmeldetag: 30.12.1991
(51) Int. Cl.: F16D 48/02

(54) **Anordnung zur Überwachung einer Reibungskupplung**
Monitoring arrangement for friction clutch
Appareil pour surveiller un embrayage à friction

(30) Priorität: 04.01.1991 DE 4100091
(43) Veröffentlichungstag der Anmeldung: 08.07.1992
(73) Patentinhaber: Fichtel & Sachs AG, D-97419 Schweinfurt (DE)
(72) Erfinder: Stürmer, Winfried, Dipl.-Ing. (FH), W-8721 Euerbach (DE); Drexl, Hans-Jürgen, Dr.-Ing., W-8724 Schonungen-Mainberg (DE)
(74) Vertreter: Liska, Horst, Dr.-Ing.

(56) Entgegenhaltungen:
- DE-A- 3 540 719
- DE-A- 3 800 607
- DE-A- 3 828 128
- PATENT ABSTRACTS OF JAPAN vol. 9, no. 162 (M-394) (1885) 6. Juli 1985 & JP-A-60 034 525 (FUJITSU K.K.) 22. Februar 1985

## Beschreibung

Die Erfindung betrifft eine Anordnung zur Überwachung einer Reibungskupplung, insbesondere einer automatisierten Reibungskupplung eines Kraftfahrzeugs, gemäß dem Oberbegriff von Anspruch 1.

Aus der DE-A-36 01 708 ist es zur Überwachung der Reibungskupplung eines Kraftfahrzeugs bekannt, das vom Motor des Kraftfahrzeugs abgegebene Drehmoment zu messen oder gegebenenfalls über ein gespeichertes Kennlinienfeld des Motors zu bestimmen und mittels einer Recheneinrichtung Reibleistungsdaten durch Multiplizieren des Drehmoments mit der Differenzdrehzahl zwischen Eingangsdrehzahl und Ausgangsdrehzahl der Kupplung zu errechnen. Die Recheneinrichtung summiert aufeinanderfolgend ermittelte Reibleistungswerte und vergleicht diesen so gebildeten Reibarbeitsmittelwert mit einem Grenzwert. Bei Überschreitung des Grenzwerts wird ein die thermische Überlastung anzeigendes Warnsignal ausgelöst. Die bekannte Überwachungsanordnung arbeitet jedoch vergleichsweise ungenau, da sie nicht zwischen momentaner Spitzenbelastung und der Kupplungsdauerbelastung unterscheiden kann.

Aus der DE-A-38 28 128 ist eine Anordnung zur Überwachung einer automatisierten Reibungskupplung eines Kraftfahrzeugs bekannt, bei der wiederum eine Recheneinrichtung abhängig von dem momentanen Drehmoment und der momentanen Differenz von Eingangsdrehzahl und Ausgangsdrehzahl der Kupplung Daten errechnet, die die momentane Reibleistung der Kupplung repräsentieren. Durch Summation der Reibleistungsdaten über mehrere Zeitintervalle unterschiedlicher Dauer hinweg wird zwischen einem kurzfristigen, einem mittelfristigen und einem langfristigen Temperaturverhalten der Kupplung unterschieden. Den für die einzelnen Zeitintervalle ermittelten Reibarbeitsmittelwerten sind wiederum Grenzwerte zugeordnet, bei deren Überschreitung entweder Warnsignale ausgelöst werden oder aber die Steuerungscharakteristik, mit der eine Steuerung die Kupplung automatisch ein- bzw. ausrückt, steuert. Um das kurzfristige, mittelfristige und langfristige Abkühlverhalten der Kupplung zu simulieren, werden von den Reibarbeitsmittelwerten periodisch Korrekturwerte abgezogen.

Auch diese bekannte Anordnung erlaubt nur eine vergleichsweise ungenaue Überwachung. Zum einen summieren sich Fehler bei der Berechnung der Reibleistungsdaten, wenn diese zur Ermittlung der Reibarbeitsmittelwerte aufsummiert werden. Die Kupplungsdauerbelastung kann damit nur sehr ungenau überwacht werden. Darüber hinaus wird bei der bekannten Anordnung das Abkühlverhalten der Kupplung nur sehr grob berücksichtigt, da das Abkühlverhalten von einer Vielzahl nicht berücksichtigter Parameter, wie zum Beispiel der Außenlufttemperatur, der Fahrgeschwindigkeit und der Kupplungsdrehzahl abhängt. Eine Überwachung der Kupplungsdauerbelastung ist damit nur begrenzt möglich. Entsprechendes gilt auch für die Überwachung der Spitzenbelastung, da die jeweils noch ertragbare Belastung von der Ausgangstemperatur der Kupplung abhängt. Eine ungenaue Bestimmung der Reibarbeitsmittelwerte hat zur Folge, daß Überlastungsschutzmaßnahmen bei einer kalten Kupplung zu früh einsetzen und unnötige Komforteinbußen mit sich bringen, während bei einer seit längerem hoch belasteten Kupplung Spitzenbelastungen die Kupplung zerstören können, bevor der Überlastungsschutz einsetzt.

Es ist Aufgabe der Erfindung, eine Anordnung zur Überwachung einer insbesondere automatisierten Reibungskupplung anzugeben, die sowohl eine momentane Spitzenbelastung als auch die Dauerbelastung der Kupplung mit hoher Genauigkeit überwachen kann.

Diese Aufgabe wird erfindungsgemäß durch die im Kennzeichen des Anspruchs 1 angegebenen Merkmale gelöst.

Im Rahmen der Erfindung werden mittels einer Recheneinrichtung mit einer vorbestimmten Zeitperiode aufeinanderfolgende Reibleistungsdaten errechnet, die die momentane Reibleistung der Kupplung repräsentieren. Die Reibleistungsdaten werden zur Ermittlung mehrerer Reibarbeitsmittelwerte insbesondere für die momentane Spitzenbelastung, eine mittelfristige Belastung und eine langfristige Dauerbelastung über mehrere Zeitintervalle geeigneter, jedoch unterschiedlicher Dauer hinweg summiert. Jedem der Reibarbeitsmittelwerte sind mehrere Grenzwerte zugeordnet, die von der Recheneinrichtung abhängig von der Temperatur der Kupplung, insbesondere der Lufttemperatur in der Kupplungsglocke, ausgewählt werden. Die Größe der Grenzwerte nimmt mit wachsender Temperatur ab. Durch die temperaturabhängige Auswahl der Grenzwerte läßt sich sowohl für die kurzfristige Spitzenbelastung als auch für die mittelfristige bis langfristige Dauerbelastung der Einfluß der Anfangstemperatur auf die Spitzenbelastung als auch der Einfluß der Umgebungsparameter auf das Abkühlverhalten hinreichend genau berücksichtigen. Die Grenzwerte werden zweckmäßigerweise empirisch ermittelt.

In einer bevorzugten Ausgestaltung der Erfindung umfaßt die Recheneinrichtung zur Ermittlung der Reibarbeitsmittelwerte mehrere periodisch aktualisierbare Zeitfensterspeicher, deren Zeitfenster jeweils eines der Zeitintervalle definieren und deren Inhalt die Recheneinrichtung nach jeder Aktualisierung mit den abhängig von der Kupplungstemperatur auswählbaren, den einzelnen Zeitfensterspeichern zugeordneten Grenzwerten vergleicht. Eine solche Ausführungsform hat den Vorteil, daß die Zeitfensterspeicher mit unterschiedlicher Taktrate aktualisiert werden können. Der die momentane Spitzenbelastung erfassende Zeitfensterspeicher kann auf diese Weise in sehr kurzen Zeitabständen von beispielsweise 0,3 bis 1,7 Sekunden aktualisiert werden, ohne daß das zur Mittelung des Reibarbeitsmittelwerts ausgenutzte Zeitfenster ebenfalls so klein gewählt werden muß. Das Zeitfenster kann um einiges größer gewählt werden und beispielsweise in der Größenordnung von einigen Sekunden liegen. Entsprechendes gilt für die übrigen Zeitfensterspeicher.

Um eine Aktualisierungsrate in der vorstehend genannten Größenordnung von 0,3 bis 1,7 Sekunden einhalten zu können, müssen die Reibleistungsdaten mit vergleichsweise hoher Taktrate von wenigstens 100 Hz berechnet werden. Dies kann im Einzelfall zu einem vergleichsweise hohen Speicherplatzbedarf der Zeitfensterspeicher führen. In einer bevorzugten Ausführungsform, die mit außerordentlich geringem Speicherplatzbedarf auskommt, ist vorgesehen, daß jeder Zeitfensterspeicher eine vorbestimmte Anzahl Speicherstufen umfaßt, deren Inhalt mit einer dem Zeitfensterspeicher eigenen, die Länge des Zeitfensters bestimmtenden Taktrate ausgehend von einer ersten Speicherstufe jedes Zeitfensterspeichers zu einer letzten Speicherstufe jedes Zeitfensterspeichers der Reihe nach durch die vorbestimmte Anzahl Speicherstufen durchschiebbar ist, und es ist ferner vorgesehen, daß jedem Zeitfensterspeicher eine Summiereinrichtung zugeordnet ist, die den Inhalt der Speicherstufen der Zeitfensterspeicher zur Bildung der Reibarbeitsmittelwerte summiert und in die erste Speicherstufe des Zeitfensterspeichers mit dem jeweils nächst längeren Zeitfenster überträgt, wobei die erste Speicherstufe des Zeitfensterspeichers mit dem kürzesten Zeitfenster die von der Recheneinrichtung errechneten Reibleistungswerte summiert aufnimmt. Bei einer solchen Speicherorganisation können die Taktraten der aufeinanderfolgenden Zeitfensterspeicher entsprechend der Länge des jeweiligen Zeitfensters gestuft werden. Dies erfolgt am einfachsten dadurch, daß die Taktrate jedes Zeitfensterspeichers gleich der Taktrate des vorausgehenden Zeitfensterspeichers multipliziert mit der Anzahl an Speicherstufen des vorausgehenden Zeitfensterspeichers ist. Der Einfachheit halber haben sämtliche Zeitfensterspeicher jeweils eine gleiche Anzahl Speicherstufen; die Zeitfensterspeicher können aber im Einzelfall auch unterschiedliche Anzahlen von Speicherstufen haben. Allgemein gilt, daß die Überwachung um so genauer erfolgt, je mehr Speicherstufen verwendet werden. Wenigstens drei Speicherstufen pro Zeitfensterspeicher haben sich als ausreichend erwiesen. Mit 6 Zeitfensterspeichern, von denen jeder z.B. 6 Speicherstufen umfaßt, läßt sich auf diese Weise ein Spektrum von 6 Reibarbeitsmittelwerten überwachen, deren Zeitfenstergröße bei 3 Sekunden beginnt und eine Dauerbelastung von 6 Stunden maximal erfaßt. Werden die jeweils ersten Speicherstufen zugleich zur Summierung ausgenutzt, so genügen insgesamt 31 Speicherplätze für die vorstehend genannte Anordnung.

Die Berechnung der momentanen Reibleistung der Kupplung setzt die Kenntnis des von der Kupplung übertragenen Drehmoments voraus. Das Kupplungsmoment kann mittels Kraftmeßsensoren gemessen werden, was jedoch vergleichsweise hohen Konstruktionsteileaufwand erfordert. Der Aufwand kann verringert werden, wenn die Drehmoment-Ermittlungseinrichtung einen Kennlinienspeicher umfaßt, der Werte des Motordrehmoments in Abhängigkeit von der Stellung eines Fahrpedals und der Eingangsdrehzahl der Kupplung speichert. Die Daten eines solchen beispielsweise als Tabellenspeicher ausgebildeten Kennlinienspeichers lassen sich empirisch ermitteln, und für die Erfassung der Stellung des Fahrpedals und der Eingangsdrehzahl der Kupplung lassen sich ohnehin vorhandene Komponenten ausnutzen. Das Motormoment entspricht aber nur näherungsweise dem Kupplungsdrehmoment. Insofern können sich bei der Errechnung der Reibleistungsdaten geringfügige und normalerweise vernachlässigbare Fehler ergeben. In einer bevorzugten Ausgestaltung ist jedoch vorgesehen, daß die Recheneinrichtung einen die zeitliche Änderung der Eingangsdrehzahl der Kupplung repräsentierenden Wert multipliziert mit einem das Trägheitsmoment des Motors repräsentierenden, vorgegebenen Wert errechnet und jeweils von dem errechneten Reibleistungswert subtrahiert. Durch diese einfache Maßnahme kann der Motormomentwert in einen aktuellen, das Kupplungsmoment repräsentierenden Wert umgerechnet werden. In einer Variante, die ebenfalls Werte des Kupplungsdrehmoments liefert, kann vorgesehen sein, daß die Drehmoment-Ermittlungseinrichtung einen Kennlinienspeicher umfaßt, der Werte des von der Kupplung übertragenen Drehmoments in Abhängigkeit von der Ausrückerposition der Kupplung speichert. Diese Variante ist ebenfalls mit vergleichsweise geringem Konstruktionsteileaufwand realisierbar.

Im folgenden wird die Erfindung anhand einer Zeichnung näher erläutert. Hierbei zeigt:
- Fig. 1: ein Blockschaltbild einer Überwachungsanordnung für eine automatisierte Reibungskupplung eines Kraftfahrzeugs;
- Fig. 2: ein Diagramm, welches den Verlauf von Reibarbeits-Grenzwerten in Abhängigkeit von der Lufttemperatur in der Kupplungsglocke zeigt und
- Fig. 3a bis 3d: Diagramme zur Erläuterung der Speicherplatzbelegung bei der Ermittelung von Reibarbeitsmittelwerten.

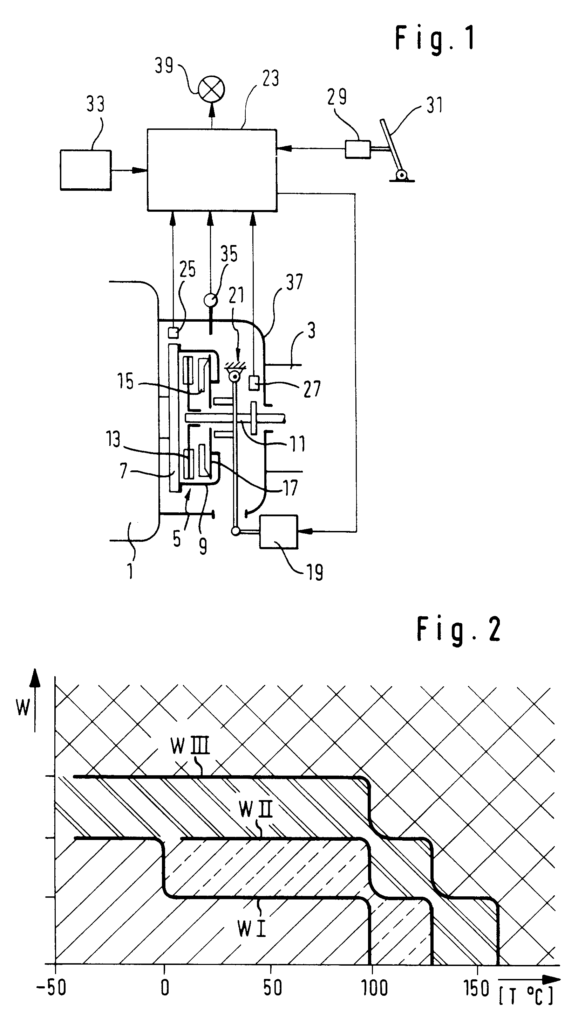

Fig. 1 zeigt schematisch eine zwischen einer Brennkraftmaschine 1 und einem Schaltgetriebe 3 eines Kraftfahrzeugs angeordnete Reibungskupplung 5. Die Kupplung 5 umfaßt einen auf einem Schwungrad 7 des Motors 1 gehaltenen Kupplungsdeckel 9 und eine drehfest auf einer Eingangswelle 11 des Getriebes 3 geführte, mit Reibbelägen versehene Kupplungsscheibe 13. Eine drehfest, aber axial beweglich an dem Gehäuse 9 geführte Anpreßplatte 15 wird von einer Membranfeder 17 zum Schwungrad 7 hin gedrückt und spannt die Kupplungsscheibe 13 zwischen sich und dem Schwungrad 7 ein. Ein insbesondere elektromotorischer Stellantrieb 19 rückt die Kupplung 5 über ein Ausrücksystem 21 abhängig von Steuersignalen einer als Mikroprozessor ausgebildeten Steuerschaltung 23 ein bzw. aus. Die Steuerschaltung 23 erfaßt mittels eines Drehzahlsensors 25 die Motordrehzahl als Eingangsdrehzahl der Kupplung 5 und mittels eines Drehzahlsensors 27 die an der Eingangswelle des Getriebes 3 auftretende Ausgangsdrehzahl der Kupplung 5. Abhängig von zumindest der Motordrehzahl und gegebenenfalls weiteren Parametern, insbesondere der mittels eines Positionssensors 29 erfaßten Stellung eines Fahrpedals 31 des Kraftfahrzeugs steuert die Steuerschaltung 23 das Einrücken der Kupplung 5. Die Steuerschaltung 23 unterscheidet hierbei in an sich bekannter Weise zwischen Anfahrsituationen und Situationen, bei welchen während der Fahrt das Getriebe 3 geschaltet wird. In beiden Fällen wird beim Einkuppeln die Rate, mit der der Stellantrieb 19 die Kupplung 5 einrückt, so gesteuert, daß möglichst ruckfrei eingekuppelt wird.

Die Steuerschaltung 23 überwacht zugleich die Temperaturbelastung der Kupplung 5 und sorgt selbsttätig für eine Minderung der Temperaturbelastung, soweit dies ohne Beeinträchtigung der Funktion der Kupplung möglich ist. Hierzu ermittelt die Steuerschaltung 23 anhand eines in einem Datenspeicher 33 gespeicherten Drehmoment-Kennfelds des Motors 1, das der aktuellen Position des Fahrpedals 31 und der momentanen Motordrehzahl zugeordnete Motordrehmoment und multipliziert das Motormoment mit der Differenz der von den Drehzahlsensoren 25, 27 erfaßten Motordrehzahl bzw. Getriebeeingangsdrehzahl. Die auf diese Weise fortlaufend periodisch ermittelten Reibleistungsdaten werden in nachfolgend noch näher erläuterter Weise in mehreren Zeitfensterspeichern aufsummiert. Die Zeitfensterspeicher enthalten damit Reibarbeitsmittelwerte. Die Zeitfensterspeicher haben unterschiedlich lange Zeitfenster und decken damit ein Spektrum ab, welches die thermische Belastung der Kupplung sowohl für kurzzeitige Spitzenbelastung als auch mittelfristige und langfristige Dauerbelastungen erfaßt.

Die Steuerschaltung 23 überwacht die thermische Belastung der Kupplung 5 abhängig von Grenzwerten, mit welchen sie den Inhalt der einzelnen Zeitfensterspeicher vergleicht. Jedem Zeitfensterspeicher sind hierbei mehrere Grenzwerte zugeordnet, deren Wert abhängig von der Kupplungstemperatur variiert wird. Die Rechenschaltung 23 ist hierzu an einen Temperatursensor 35 angeschlossen, der die Lufttemperatur in einer die Kupplung 5 umgebenden Kupplungsglocke 37 mißt. Die Größe der den einzelnen Zeitfensterspeichern zugeordneten Grenzwerte ist gestaffelt, so daß bei Überschreitung der einzelnen Grenzwerte unterschiedliche Schutzmaßnahmen bzw. Warnmaßnahmen ausgelöst werden können.

Fig. 2 zeigt den prinzipiellen Verlauf der Temperaturabhängigkeit der Grenzwerte WI, WII und WIII für einen der Zeitfensterspeicher. Die Grenzwerte der übrigen Zeitfensterspeicher unterscheiden sich lediglich durch die Absolutwerte W, die mit wachsender Größe des zur Mittelung herangezogenen Zeitfensters zunehmen, und sie können sich durch die Temperaturabhängigkeit der Grenzen von dem Beispiel der Fig. 2 unterscheiden.

Die Sicherungsmaßnahmen der Steuerschaltung 23 hängt davon ab, in welchem Grenzwert (W)-Temperatur-(T)-Bereich die Kupplung 5 sich befindet. In dem von der Temperaturachse und der Grenzlinie WI begrenzten, einfach schraffierten Bereich werden keine Überlastungsschutzmaßnahmen ergriffen. In dem zwischen den Grenzenlinien WI und WII sich befindenden, durch ausgezogene und gestrichelte Schraffurlinien gekennzeichneten Bereich wird die normalerweise von der Steuerschaltung 23 beim Einkuppeln festgelegte Einkuppelrate um 50 % erhöht. Darüber hinaus mindert die Steuerschaltung 23 einen eventuell für die Minderung von Drehschwingungen vorgegebenen Zusatzschlupf der Kupplung ebenfalls um etwa 50 %. Durch diese Maßnahme wird der Kupplungskomfort und der Fahrkomfort verringert. Gleichzeitig verringert sich aber auch die Reibbelastung der Kupplung. Befindet sich der in dem Zeitfensterspeicher stehende Reibarbeitsmittelwert unter Berücksichtigung der Glockenlufttemperatur der Kupplung im Bereich zwischen den Grenzlinien WIII und WII, der in Fig. 2 durch eine Doppelschraffur gekennzeichnet ist, so wird der Übergangsschlupf der Kupplung auf ein Minimum verringert, d.h. die Zustellrate der Kupplung auf ein Maximum erhöht und eine zur Drehschwingungsdämpfung vorgesehene Schlupfregelung wird abgeschaltet. Übersteigt der Reibarbeitsmittelwert die Grenzlinie WIII und befindet sich in dem kreuzschraffierten Bereich der Fig. 2, so wird der Kupplungsstellantrieb zusätzlich zu der vorstehend erläuterten Verringerung des Übergangsschlupfs und zusätzlich zum Abschalten einer eventuellen Schlupfregelung in eine erzwungene Schwingung versetzt, die sich dem Fahrer als "Rupfen" der Kupplung bemerkbar macht. Zusätzlich signalisiert die Steuerschaltung 23 über ein Warnsignal 39 (Fig. 1) die drohende Überlastung der Kupplung.

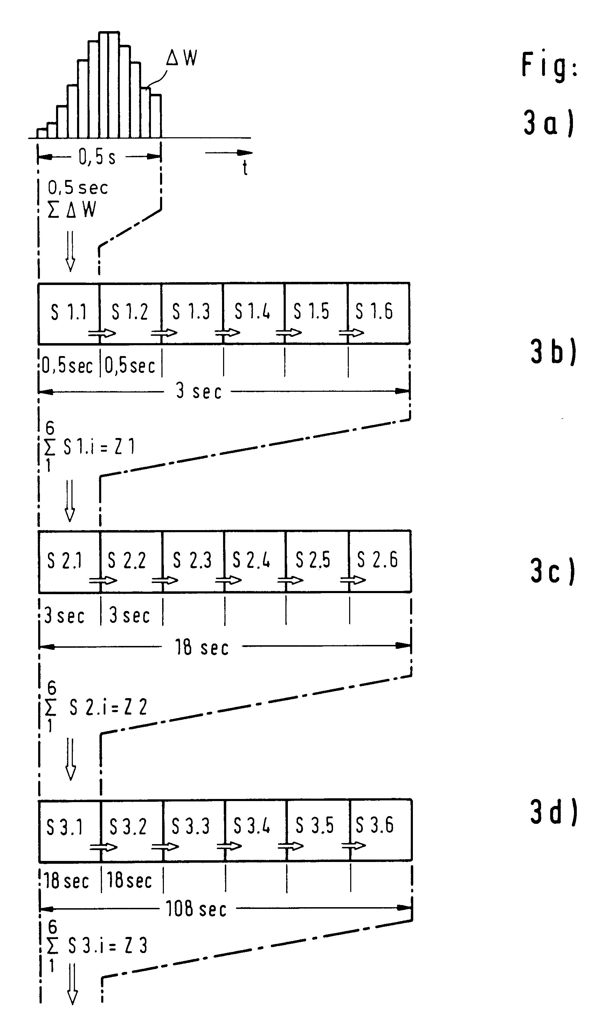

Anhand der Fig. 3a bis 3d soll nun die Organisation der Zeitfensterspeicher erläutert werden. Fig. 3a zeigt als Flächen W dargestellte Reibarbeitswerte, wie sie sich für die von der Steuerschaltung im Rechnertakt aufeinanderfolgend als Reibleistungsdaten multipliziert mit der Rechnertaktperiode darstellen. Jeder der Zeitfensterspeicher, von denen in den Fig. 3b, 3c und 3d lediglich drei dargestellt sind, umfaßt 6 Speicherstufen S1.1 bis S1.6, S2.1 bis S2.6, S3.1 bis S3.6 usw. Die Speicherstufen S1.1 bis S1.6 bilden den Zeitfensterspeicher mit dem kleinsten Zeitfenster. Die im Rechnertakt errechneten Reibleistungswerte werden in der ersten Stufe S1.1 aufsummiert. Alle 0,5 Sekunden wird der Inhalt der Speicherstufen S1.1 bis S1.6, wie durch Pfeile angedeutet, um eine Speicherstufe verschoben. Die Speicherstufe S1.6 wird dadurch überschrieben, während die Speicherstufe S1.1 gelöscht wird und erneut mit der Summierung von Reibleistungsdaten beginnt. Alle 0,5 Sekunden wird darüber hinaus der Reibarbeitsmittelwert Z1 über ein Zeitfenster von 3 Sekunden gebildet, indem der Inhalt der Speicherstufen S1.1 bis S1.6 summiert wird. Der Reibarbeitsmittelwert Z1 wird mit den für diesen Zeitfensterspeicher vorbestimmten Grenzwerten WI, WII und WIII verglichen,und anhand der Glockenlufttemperatur wird geprüft, ob Schutzmaßnahmen eingeleitet werden müssen.

Aufgrund der alle 0,5 Sekunden erfolgenden Aktualisierung beruht der Reibarbeitsmittelwert Z1 alle 3 Sekunden auf neuen Daten. Die im 0,5 Sekundentakt aufeinanderfolgenden Reibarbeitsmittelwerte Z1 werden ähnlich dem ersten Zeitfensterspeicher in der ersten Speicherstufe S2.1 des zweiten Zeitfensterspeichers aufsummiert, und in einen um die Anzahl der Speicherstufen vervielfachten Aktualisierungstakt, hier mit einer Periode von 3 Sekunden, von einer Speicherstufe zur nächsten geschoben. Die letzte Speicherstufe S2.6 wird wiederum überschrieben, während die ersten Speicherstufe S2.1 jeweils nach Aufsummierung von 6 Werten Z1 gelöscht wird. Der Inhalt der 6 Speicherstufen S2.1 bis S2.6 wird jeweils summiert. Der sich ergebende Reibarbeitsmittelwert Z2 wird damit über ein Zeitfenster von 18 Sekunden gemittelt. Mit jeder Aktualisierung des Reibarbeitsmittelwerts, d.h. nach jeweils 3 Sekunden, wird der Reibarbeitsmittelwert mit den zugehörigen Grenzwerten des zweiten Zeitfensterspeichers verglichen, und abhängig von der Glockenlufttemperatur werden Schutzmaßnahmen eingeleitet. Die Organisation der Speicherstufen S3.1 bis S3.6 des dritten Zeitfensterspeichers ist analog zu den vorstehenden Speichern, wobei jedoch die Aktualisierungsperiode nunmehr 18 Sekunden beträgt und das Zeitfenster 108 Sekunden. Die Aktualisierungsperioden weiterer Zeitfensterspeicher betragen dementsprechend 108 Sekunden, 648 Sekunden und 3888 Sekunden. Mit 6 Zeitfensterspeichern läßt sich damit ein Zeitfenster von 6 Stunden realisieren.

Zusätzlich zu den durch die Grenzwertüberwachung ausgelösten Schutzmaßnahmen reagiert die Steuerschaltung 23 auch auf die Schlupfdauer der Kupplung. Wird an einer Steigung versucht, das Kraftfahrzeug durch Drücken des Fahrpedals 31 und daraus resultierendem Schleifenlassen der Kupplung am Zurückrollen zu hindern, so löst die Steuerschaltung 23 nach einer vorbestimmten Zeitspanne, beispielsweise 5 Sekunden nach Beginn des Schleifvorgangs, die vorstehend bereits erwähnte oszillierende Bewegung des Stellantriebs 19 der Kupplung aus. Das "Rupfen" der Kupplung und die damit verbundene Komfortminderung bringt den Fahrer dann in aller Regel dazu, seine Verhaltensweise zu ändern. Zusätzlich kann die Steuerschaltung 23 das Warnsignal 39 einschalten.

Für die Ermittlung der Reibleistungsdaten wurde im vorstehend erläuterten Ausführungsbeispiel von einem Drehmomentkennfeld des Motors ausgegangen. Da für die Berechnung der Reibleistung jedoch das von der Kupplung übertragene Drehmoment relevant ist, wird in einer verbesserten Ausführungsform von jedem aus dem Motorkennfeld gelesenen Drehmomentwert ein Korrekturwert abgezogen, den die Steuerschaltung 23 durch Multiplizieren des Werts der zeitlichen Änderung der Motordrehzahl mit einem das Trägheitsmoment des Motors repräsentierenden Wert errechnet. Alternativ kann auch ein gespeichertes Kupplungsdrehmomentkennfeld ausgenutzt werden, in welchem das Kupplungsmoment beispielsweise in Abhängigkeit von der Position des Ausrückersystems 21 gespeichert ist. Die Position des Ausrückersystems 21 ist der Steuerschaltung 23 über Signale eines nicht näher dargestellten Positionssensors des Stellglieds 19 bekannt.

## Patentansprüche

1. Anordnung zur Überwachung einer Reibungskupplung, insbesondere einer automatisierten Reibungskupplung eines Kraftfahrzeugs, umfassend
a) eine Drehmoment-Ermittlungseinrichtung zur Ermittlung von Daten, die das an der Kupplung (5) auftretende, momentane Drehmoment zumindest näherungsweise repräsentieren,
b) Drehzahlsensoren (25, 27), die der momentanen Eingangsdrehzahl und der momentanen Ausgangsdrehzahl entsprechende Daten liefern,
c) eine Recheneinrichtung (23), die abhängig von den Daten der Drehmoment-Ermittlungseinrichtung und der Drehzahlsensoren (25, 27) mit einer vorbestimmten Zeitperiode aufeinanderfolgend Daten errechnet, die zumindest näherungsweise die momentane Reibleistung der Kupplung (5) repräsentieren, und die die Reibleistungsdaten zur Ermittlung mehrerer Reibarbeitsmittelwerte über mehrere Zeitintervalle unterschiedlicher Dauer hinweg summiert, wobei die Recheneinrichtung (23) die in den einzelnen Zeitintervallen ermittelten Reibarbeitsmittelwerte mit den Zeitintervallen zugeordneten, vorgegebenen Grenzwerten vergleicht und bei Überschreitung der einzelnen Grenzwerte den Grenzwerten zugeordnete Überschreitungssignale erzeugt,
**dadurch gekennzeichnet,** daß
ein die Temperatur eines Bauteils (37) der Kupplung (5) erfassender Temperatursensor (35) vorgesehen ist,
daß den einzelnen Reibarbeitsmittelwerten jeweils mehrere Grenzwerte zugeordnet sind, deren Größe eine Funktion der Kupplungstemperatur ist, und daß die Recheneinrichtung (23) die Überschreitungssignale abhängig von der erfaßten Kupplungstemperatur und den für die erfaßte Kupplungstemperatur vorgegebenen Größen der Grenzwerte erzeugt.

2. Anordnung nach Anspruch 1, dadurch gekennzeichnet, daß die Recheneinrichtung (23) zur Ermittlung der Reibarbeitsmittelwerte mehrere periodisch aktualisierbare Zeitfensterspeicher (Z) umfaßt, deren Zeitfenster jeweils eines der Zeitintervalle definieren und deren Inhalt die Recheneinrichtung (23) nach jeder Aktualisierung mit den abhängig von der Kupplungstemperatur auswählbaren, den einzelnen Zeitfensterspeichern (Z) zugeordneten Grenzwerten vergleicht.

3. Anordnung nach Anspruch 2, dadurch gekennzeichnet, daß jeder Zeitfensterspeicher (Z) eine vorbestimmte Anzahl Speicherstufen (S) umfaßt, deren Inhalt mit einer dem Zeitfensterspeicher (Z) eigenen Taktrate ausgehend von einer ersten Speicherstufe jedes Zeitfensterspeichers (Z) zu einer letzten Speicherstufe jedes Zeitfensterspeichers (Z) der Reihe nach durch die vorbestimmte Anzahl Speicherstufen (S) durchschiebbar ist,
und daß jedem Zeitfensterspeicher (Z) eine Summiereinrichtung zugeordnet ist, die den Inhalt der Speicherstufen (S) der Zeitfensterspeicher (Z) zur Bildung der Reibarbeitsmittelwerte summiert und im Takt der Taktrate in der ersten Speicherstufe des Zeitfensterspeichers (Z) mit dem jeweils nächstlängeren Zeitfenster speichert, wobei die erste Speicherstufe des Zeitfensterspeichers (Z) mit dem kürzesten Zeitfenster die von der Recheneinrichtung (23) errechneten Reibleistungswerte summiert aufnimmt.

4. Anordnung nach Anspruch 3, dadurch gekennzeichnet, daß die Taktrate jedes Zeitfensterspeichers (Z) gleich der Taktrate des vorausgehenden Zeitfensterspeichers (Z) multipliziert mit der Anzahl an Speicherstufen (S) des vorausgehenden Zeitfensterspeichers (Z) ist.

5. Anordnung nach Anspruch 4, dadurch gekennzeichnet, daß die Zeitfensterspeicher (Z) jeweils eine gleiche Anzahl Speicherstufen (S) umfassen.

6. Anordnung nach einem der Ansprüche 3 bis 5, dadurch gekennzeichnet, daß jeder Zeitfensterspeicher (Z) wenigstens 3, vorzugsweise 5 bis 7 Speicherstufen (S) aufweist.

7. Anordnung nach einem der Ansprüche 3 bis 6, dadurch gekennzeichnet, daß die Taktrate des Zeitfensterspeichers (Z) mit dem kleinsten Zeitfenster zwischen 0,3 sec und 1,7 sec liegt.

8. Anordnung nach einem der Ansprüche 3 bis 5, dadurch gekennzeichnet, daß die den einzelnen Reibarbeitsmittelwerten zugeordneten Grenzwerte mit wachsender Temperatur insbesondere in Stufen abnehmen.

9. Anordnung nach einem der Ansprüche 1 bis 8, dadurch gekennzeichnet, daß der Temperatursensor (35) die Lufttemperatur in einer die Kupplung (5) umschließenden Kupplungsglocke (37) mißt.

10. Anordnung nach einem der Ansprüche 1 bis 9, dadurch gekennzeichnet, daß die Recheneinrichtung (23) einen die zeitliche Änderung der Eingangsdrehzahl der Kupplung (5) repräsentierenden Wert multipliziert mit einem das Trägheitsmoment des Motors (1) repräsentierenden, vorgegebenen Wert errechnet und jeweils von dem errechneten Reibleistungswert subtrahiert.

11. Anordnung nach einem der Ansprüche 1 bis 10, dadurch gekennzeichnet, daß die Drehmoment-Ermittlungseinrichtung einen Kennlinienspeicher (33) umfaßt, der Werte des Motordrehmoments in Abhängigkeit von der Stellung eines Leistungsstellglieds des Motors, insbesondere eines Fahrpedals (31) und der Eingangsdrehzahl der Kupplung (5) speichert.

12. Anordnung nach einem der Ansprüche 1 bis 10, dadurch gekennzeichnet, daß die Drehmoment-Ermittlungseinrichtung einen Kennlinienspeicher (33) umfaßt, der Werte des von der Kupplung (5) übertragenen Drehmoments in Abhängigkeit von der Ausrückerposition der Kupplung (5) speichert.

## Claims

1. A device for the monitoring of a friction clutch, particularly an automised friction clutch of a motor vehicle, comprising
a) a torque detection device for detecting data which represent at least approximately the instantaneous torque on the clutch (5);
b) rotational speed sensors (25, 27) which supply data corresponding to the instantaneous input rotational speed and to the instantaneous output rotational speed;
c) a computer device (23) which, depending on the data from the torque detection device and the rotational speed sensors (25, 27), computes data successively with a predetermined time period representing at least approximately the instantaneous frictional performance of the clutch (5), and which adds up the frictional performance data for the determination of several frictional work mean values over several time intervals of different durations, in which arrangement the computer device (23) compares the frictional work mean values determined in the individual time intervals with the predetermined limit values associated with the time intervals and, in the event of the individual limit values being exceeded, produces upper deviation signals,
**characterised in that**
a temperature sensor (35) is provided which detects the temperature of a component (37) of the clutch (5), in that, several limit values are associated with the individual frictional work mean values, the magnitude of which is a function of the clutch temperature, and in that the computer device (23) produces the upper deviation signals depending on the clutch temperature detected and on the values predetermined for the detected clutch temperature.

2. A device according to claim 1, characterised in that the computer device (23) comprises, for the determination of the frictional work mean values, several periodically up-datable time window stores (Z), the time windows of which define respectively one of the time intervals, and the contents of which the computer device (23) compares after each up-dating with the limit values selectable depending on the clutch temperature and associated with the individual time window stores (Z).

3. A device according to claim 2, characterised in that each time window store (Z) comprises a predetermined number of store stages (S), the contents of which, at a clock rate which is specific to the time window store (Z), starting from a first store stage of each time window store (Z), can be shifted to a last store stage of each time window store (Z) in succession through the predetermined number of store stages (S), and in that, associated with each time window store (Z), is a summation device which adds up the contents of the store stages (S) of the time window store (Z) to form the frictional work mean value, and stores same in the cycle of the clock rate in the first store stage of the time window store (Z) with the respectively next-in-length time window, the first store stage of the time window store (Z), with the shortest time window, taking up summated the frictional work values computed by the computer device (23).

4. A device according to claim 3, characterised in that the clock rate of each time window store (Z) is equal to the clock rate of the preceding time window store (Z) multiplied by the number of store stages (S) of the preceding time window store (Z).

5. A device according to claim 4, characterised in that the time window stores (Z) comprise respectively a same number of store stages (S).

6. A device according to one of claims 3 to 5, characterised in that each time window store (Z) has at least three, preferably five to seven, store stages (S).

7. A device according to one of claims 3 to 6, characterised in that the clock rate of the time window store (Z) with the smallest time window is between 0.3 sec and 1.7 sec.

8. A device according to one of claims 3 to 5, characterised in that the limit values associated with the individual frictional work mean values decrease, particularly in stages, as temperature rises.

9. A device according to one of claims 1 to 8, characterised in that the temperature sensor (35) measures the air temperature in a clutch casing (37) surrounding the clutch (5).

10. A device according to one of claims 1 to 9, characterised in that the computer device (23) calculates a value representing the modification over time of the input rotational speed of the coupling (5) multiplied by predetermined value representing the moment of inertia of the engine (1) and deducts it in each instance from the computed friction performance value.

11. A device according to one of claims 1 to 10, characterised in that the torque determination device comprises a characteristic store (33) which stores values of the engine torque dependent on the position of a performance servo component of the engine, particularly an accelerator pedal (31), and on the input rotational speed of the clutch (5).

12. A device according to one of claims 1 to 10, characterised in that the torque determination device comprises a characteristic store (33) which stores values of the torque transmitted by the clutch (5) depending on the position of the clutch (5) release device.

## Revendications

1. Dispositif de contrôle d'un embrayage à friction, en particulier d'un embrayage à friction automatique d'un véhicule automobile, comportant
a) un dispositif de détermination du couple de rotation pour la détermination de données, qui représentent au moins approximativement le couple de rotation instantané, se manifestant sur l'embrayage (5),
b) des capteurs de vitesse de rotation (25, 27), qui fournissent des données correspondant à la vitesse de rotation d'entrée instantanée et à la vitesse de rotation de sortie instantanée,
c) un dispositif de calcul (23), qui calcule successivement, en fonction des données du dispositif de détermination du couple de rotation et des capteurs de vitesse de rotation (25, 27), avec une période de temps prédéterminée, des données représentant au moins approximativement la puissance de friction instantanée de l'embrayage (5), et qui additionne les données de puissance de friction pour déterminer plusieurs valeurs moyennes de travail de friction sur plusieurs intervalles de temps de durée différente, le dispositif de calcul (23) comparant les valeurs moyennes de travail de friction, déterminées dans les différents intervalles de temps, aux valeurs limites données, associées aux intervalles de temps et, en cas de dépassement des différentes valeurs limites, produisant des signaux de dépassement associés aux valeurs limites,
caractérisé en ce qu'il est prévu un capteur de température (35), détectant la température d'un composant (37) de l'embrayage (5),
en ce qu'aux différentes valeurs moyennes de travail de friction sont associées plusieurs valeurs limites, dont la grandeur est une fonction de la température de l'embrayage, et en ce que le dispositif de calcul (23) produit les signaux de dépassement en fonction de la température détectée de l'embrayage et des grandeurs des valeurs limites, données pour la température détectée de l'embrayage.

2. Dispositif selon la revendication 1, caractérisé en ce que le dispositif de calcul (23) comprend, pour la détermination des valeurs moyennes de travail de friction, plusieurs mémoires de fenêtres de temps (Z) actualisables périodiquement, dont les fenêtres de temps définissent chaque fois l'un des intervalles de temps et dont le contenu compare le dispositif de calcul (23), après chaque actualisation, aux valeurs limites sélectionnables en fonction de la température de l'embrayage, associées aux différentes mémoires de fenêtres de temps (Z).

3. Dispositif selon la revendication 2, caractérisé en ce que chaque mémoire de fenêtres de temps (Z) comprend un nombre prédéterminé d'étages de mémoire (S), dont le contenu peut passer, à une cadence propre à la mémoire de fenêtres de temps (Z), partant d'un premier étage de mémoire de chaque mémoire de fenêtres de temps (Z) vers un dernier étage de mémoire de chaque mémoire de fenêtres de temps (Z), dans l'ordre, à travers le nombre prédéterminé d'étages de mémoire (S), et en ce qu'à chaque mémoire de fenêtres de temps (Z) est associé un dispositif totalisateur, qui additionne le contenu des étages de mémoire (S) des mémoires de fenêtres de temps (S), pour former les valeurs moyennes de travail de friction et le mémorise au rythme de la fréquence de rythme dans le premier étage de la mémoire de fenêtres de temps (Z) avec la fenêtre de temps plus longue suivante, le premier étage de la mémoire de fenêtres de temps (Z) avec la fenêtre de temps la plus courte recevant additionnées les valeurs de puissance de friction calculées par le dispositif de calcul (23).

4. Dispositif selon la revendication 3, caractérisé en ce que la fréquence de rythme de chaque mémoire de fenêtres de temps (Z) est égale à la fréquence de rythme de la mémoire de fenêtres de temps (Z) précédente, multipliée par le nombre d'étages de mémoire (S) de la mémoire de fenêtres de temps (Z) précédente.

5. Dispositif selon la revendication 4, caractérisé en ce que les mémoires de fenêtres de temps (Z) comprennent un nombre égal d'étages de mémoire (S).

6. Dispositif selon l'une des revendications 3 à 5, caractérisé en ce que chaque mémoire de fenêtres de temps (Z) comprend au moins 3, de préférence 5 à 7 étages de mémoire (S).

7. Dispositif selon l'une des revendications 3 à 6, caractérisé en que la fréquence de rythme de la mémoire de fenêtres de temps (Z) avec la plus petite fenêtre de temps se situe entre 0,3 s et 1,7 secondes.

8. Dispositif selon l'une des revendications 3 à 5, caractérisé en ce que les valeurs limites associées aux différentes valeurs moyennes de travail de friction diminuent en particulier par gradins, lorsque la température augmente.

9. Dispositif selon l'une des revendications 1 à 8, caractérisé en ce que le capteur de température (35) mesure la température de l'air dans une cloche d'embrayage (37) enfermant l'embrayage (5).

10. Dispositif selon l'une des revendications 1 à 9, caractérisé en ce que le dispositif de calcul (23) calcule une valeur représentant la variation dans le temps de la vitesse de rotation d'entrée de l'embrayage (5), multipliée par une valeur donnée, représentant le moment d'inertie du moteur (1), et la soustrait chaque fois de la valeur de puissance de friction calculée.

11. Dispositif selon l'une des revendications 1 à 10, caractérisé en ce que le dispositif de détermination du couple de rotation comprend une mémoire de courbe caractéristique (33), qui mémorise des valeurs du couple de rotation du moteur en fonction de la position d'un organe de réglage de puissance du moteur, en particulier d'une pédale d'accélérateur (31) et de la vitesse de rotation d'entrée de l'embrayage (5).

12. Dispositif selon l'une des revendications 1 à 10, caractérisé en ce que le dispositif de détermination du couple de rotation comprend une mémoire de courbe caractéristique (33), qui mémorise les valeurs du couple de rotation transmis par l'embrayage (5), en fonction de la position de la butée de l'embrayage (5).
